# FASCICULE DE BREVET EUROPEEN

(11) **EP 0 682 613 B1**
(45) Date de publication et mention de la délivrance du brevet: **09.04.1997**
(21) Numéro de dépôt: 94904690.8
(22) Date de dépôt: 19.01.1994
(51) Int. Cl.: B60T 8/36, F16K 31/06

(54) **VALVE A DECALAGE DE PRESSION ET BY-PASS ELECTRIQUE**
ELEKTROMAGNETISCH UND DURCH DRUCK BETÄTIGBARES VENTIL
PRESSURE SHIFT VALVE AND ELECTRICAL BY-PASS

(30) Priorité: 12.02.1993 FR 9301564
(43) Date de publication de la demande: 22.11.1995
(73) Titulaire: Bosch Systemes de Freinage, 93700 Drancy (FR)
(72) Inventeur: CASTEL, Philippe, F-75005 Paris (FR)
(74) Mandataire: Bentz, Jean-Paul
(86) Numéro de dépôt international: FR9400061
(87) Numéro de publication internationale: WO9418040

(56) Documents cités:
- EP-A- 0 434 201
- EP-A- 0 462 867
- EP-A- 0 527 065
- WO-A-91/18774
- DE-A- 2 211 921
- FR-A- 2 301 419
- GB-A- 2 252 374

## Description

La présente invention concerne une électrovalve hydraulique, propre à produire une pression de sortie décalée par rapport à une pression d'entrée délivrée par une source de fluide sous pression, et comprenant : un boîtier pourvu d'un alésage ; un piston coulissant de façon étanche dans cet alésage et délimitant une chambre d'entrée reliée à la source de fluide sous pression et une chambre de sortie reliée à un circuit d'utilisation de la pression de sortie; un passage traversant le piston ; une soupape installée dans ce passage pour en contrôler l'ouverture et comprenant un organe d'obturation élastiquement sollicité contre un siège ménagé sur le piston dans ce passage ; et une aiguille faisant saillie de la chambre de sortie dans le passage, pour décoller sélectivement l'organe d'obturation de son siège et établir corrélativement une communication entre les chambres d'entrée et de sortie à travers le passage, cette communication étant établie lorsque la pression dans la chambre d'entrée est supérieure à un seuil prédéterminé.

Une électrovalve de ce type a déjà été proposée dans l'art antérieur, tel qu'illustré par exemple par le document EP-A-0 527 065, en particulier pour son application aux systèmes de freinage de véhicules automobiles équipés d'au moins un circuit fluidique de freinage et d'un circuit électrique de freinage.

Malgré tout l'intérêt de cette proposition antérieure, qui vise à obtenir en fonctionnement un décalage entre la pression d'entrée et la pression de sortie, il est apparu que cette pression différentielle, indésirable lorsque le système se trouve au repos, ne pouvait être éliminée que par des moyens relativement complexes.

La présente invention, qui se si tue dans ce contexte, a pour but de permettre l'élimination de cette pression différentielle par des moyens simples, peu coûteux et d'une grande fiabilité.

A cette fin, l'électrovalve de l'invention est essentiellement caractérisée en ce que l'aiguille est mue par un électroaimant à l'encontre d'un ressort et en ce que ce ressort repousse l'aiguille dans une position où elle décolle l'organe d'obturation de son siège de façon permanente aussi longtemps que l'électroaimant n'est pas activé.

Bien qu'on connaisse déjà par le document EP-A1-0 434 201, une électrovalve dans laquelle l'aiguille peut être actionnée par différents moyens moteurs, et notamment par un moteur électrique, ces derniers sont conçus dans ce document, en raison de l'application particulière visée pour adopter une position quelconque dans un continuum de positions stables possibles.

Ainsi, en cas de panne de ces moyens moteurs, l'aiguille peut adopter une position quelconque dans ce continuum, et l'éventuelle différence de pression résiduelle entre les chambres d'entrée et de sortie ne se trouve pas nécessairement supprimée, contrairement à ce qui est le cas dans l'invention.

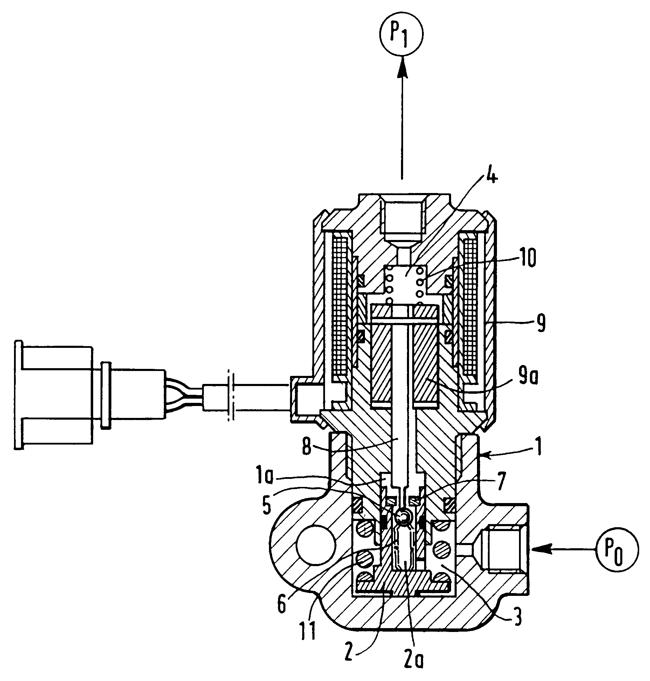

D'autres caractéristiques et avantages de l'invention ressortiront clairement de la description qui en est faite ci-après, à titre indicatif et nullement limitatif, en référence au dessin annexé dont l'unique figure est une vue en coupe d'une électrovalve conforme à l'invention.

Cette dernière comprend : un boîtier 1 pourvu d'un alésage la ; un piston 2 coulissant de façon étanche dans cet alésage et délimitant une chambre d'entrée 3 reliée à une source de fluide sous pression Po, et une chambre de sortie 4 reliée à un circuit d'utilisation de la pression de sortie P1 ; un passage 2a traversant le piston; une soupape installée dans ce passage pour en contrôler l'ouverture et comprenant une bille 5 élastiquement sollicitée par un ressort 6 contre un siège 7 ménagé sur le piston dans le passage 2a ; et une aiguille 8 faisant saillie de la chambre de sortie 4 dans le passage, pour décoller sélectivement la bille 5 de son siège et établir corrélativement une communication entre les chambres d'entrée et de sortie 3, 4 à travers le passage 2a.

L'aiguille 8 est solidaire du noyau 9a d'un électroaimant 9, ce noyau étant poussé en direction de la bille 5 par un ressort 10.

De son côté, le piston 2 est repoussé par un ressort 11 contre l'intérieur du boîtier 1, dans une direction qui tend au contraire à éloigner la bille 5 de l'aiguille 8.

Néanmoins la longueur de l'aiguille 8 est prévue pour que celle-ci décolle la bille 5 de son siège 7 en l'absence d'activation de l'électroaimant, de sorte que les chambres d'entrée et de sortie 3, 4 communiquent librement entre elles de façon permanente, les pressions régnant dans ces chambres étant donc égales.

Au tout début du fonctionnement de l'électrovalve et pendant tout le temps de son utilisation, l'électroaimant 9 est activé, ce qui provoque la translation du noyau 9a vers la chambre de sortie 4, le retrait de l'aiguille 8, et la fermeture de la soupape constituée par la bille 5 et le siège 7.

Dans ces conditions, le passage 2a est fermé et l'élévation de la pression d'entrée Po provoque la translation du piston 2 à l'intérieur de l'alésage 1a, à l'encontre de la force exercée par le ressort 11.

Lorsque la différence des pressions d'entrée et de sortie atteint un seuil déterminé par la raideur du ressort 11, sa contrainte initiale et la course de l'aiguille 8, cette dernière décolle à nouveau la bille 5 du siège 7 et la pression de sortie P1 s'établit à une valeur représentée par celle de la pression d'entrée diminuée de ce seuil.

## Revendications

1. Electrovalve hydraulique, propre à produire une pression de sortie décalée par rapport à une pression d'entrée délivrée par une source de fluide sous pression (Po), et comprenant : un boîtier (1) pourvu d'un alésage (1a) ; un piston (2) coulissant de façon étanche dans cet alésage (1a) et délimitant une chambre d'entrée (3) reliée à la source de fluide sous pression et une chambre de sortie (4) reliée à un circuit d'utilisation de la pression de sortie ; un passage (2a) traversant le piston (2) ; une soupape installée dans ce passage (2a) pour en contrôler l'ouverture et comprenant un organe d'obturation (5) élastiquement sollicité contre un siège (7) ménagé sur le piston (2) dans ce passage (2a); et une aiguille (8) faisant saillie de la chambre de sortie (4) dans le passage (2a), pour décoller sélectivement l'organe d'obturation (5) de son siège (7) et établir corrélativement une communication entre les chambres d'entrée et de sortie (3, 4) à travers le passage (2a), cette communication étant établie lorsque la pression dans la chambre d'entrée (3) est supérieure à un seuil prédéterminé, caractérisée en ce que l'aiguille (8) est mue par un électroaimant (9) à l'encontre d'un ressort (10) et en ce que ce ressort (10) repousse l'aiguille (8) dans une position où elle décolle l'organe d'obturation (5) de son siège (7) de façon permanente aussi longtemps que l'électroaimant (9) n'est pas activé.

## Claims

1. Hydraulic solenoid valve capable of producing an outlet pressure modified relative to an inlet pressure supplied by a source of pressurized fluid (Po), and comprising: a casing (1) provided with a bore (1a); a piston (2) sliding leaktightly in this bore (1a)and defining an inlet chamber (3) connected to the source of pressurized fluid, and an outlet chamber (4) connected to a use circuit for the outlet pressure; a passage (2a) through the piston (2); a valve installed in this passage (2a) for controlling the opening thereof and comprising a shut-off member (5) stressed elastically against a seat (7) formed on the piston (2) in this passage (2a); and a needle (8) projecting from the outlet chamber (4) into the passage (2a), so as, when desired, to lift the shut-off member (5) off its seat (7) and, correspondingly, to establish communication between the inlet chamber (3) and outlet chamber (4) via the passage (2), this communication being established when the pressure in the inlet chamber (3) exceeds a predetermined threshold, characterized in that the needle (8) is moved by an electromagnet (9) counter to a spring (10) and that this spring (10) pushes the needle (8) back into a position in which it lifts the shutt-off member (5) off its seat (7)continuously as long as this electromagnet (9) is not activated.

## Patentansprüche

1. Hydraulisches Elektroventil, das einen Ausgangsdruck erzeugen kann, der bezüglich eines von einer Quelle unter Druck (Po) stehenden Fluides gelieferten Eingangsdruck verschoben ist, und das enthält: ein Gehäuse (1), das mit einer Bohrung (1a) versehen ist, einen Kolben (2), der in dichter Weise in dieser Bohrung (1a) gleitet und eine mit der Druckfluidquelle verbundene Eingangskammer (3) sowie eine Ausgangskammer (4) abgrenzt, die mit einem Kreis zur Verwendung des Ausgangsdrucks verbunden ist, einen den Kolben (2) durchquerenden Durchgang (2a), ein Ventil, das in diesem Durchgang (2a) angebracht ist, um dessen Öffnen zu kontrollieren, und das ein Verschlußorgan (5) aufweist, das elastisch gegen einen an dem Kolben (2) in diesem Durchgang (2a) ausgebildeten Sitz (7) beaufschlagt wird, und eine Nadel (8), die aus der Ausgangskammer (4) in den Durchgang (2a) hinein hervorsteht, um das Verschlußorgan (5) selektiv von seinem Sitz (7) abzuheben und entsprechend eine Verbindung zwischen der Eingangs- und der Ausgangskammer (3, 4) durch den Durchgang (2a) auszubilden, wobei diese Verbindung dann ausgebildet wird, wenn der Druck in der Eingangskammer größer als eine vorbestimmte Schwelle ist, dadurch gekennzeichnet, daß die Nadel (8) durch einen Elektromagneten (9) entgegen einer Feder (10) bewegt wird und daß diese Feder (10) die Nadel (8) in eine Stellung zurückdrückt, in der sie permanent das Verschlußorgan (5) von seinem Sitz (7) abhebt, solange der Elektromagnet (9) nicht aktiviert ist.
